# EUROPÄISCHE PATENTSCHRIFT

(11) **EP 3 238 196 B1**
(45) Veröffentlichungstag und Bekanntmachung des Hinweises auf die Patenterteilung: **13.02.2019**
(21) Anmeldenummer: 15788363.8
(22) Anmeldetag: 26.10.2015
(51) Int. Cl.: G08G 1/005, G01C 21/34, G01C 21/36, G06Q 50/30, G08G 1/0968, G08G 1/0969, G08G 1/00

(54) **VERFAHREN UND SYSTEM ZUR FÖRDERUNG UMWELTFREUNDLICHER VERKEHRSMITTEL**
METHOD AND SYSTEM FOR PROMOTING ENVIRONMENTALLY FRIENDLY MEANS OF TRANSPORT
PROCÉDÉ ET SYSTÈME POUR PROMOUVOIR DES MOYENS DE TRANSPORT ÉCOLOGIQUES

(30) Priorität: 12.02.2015 DE 102015202578
(43) Veröffentlichungstag der Anmeldung: 01.11.2017
(73) Patentinhaber: Siemens Aktiengesellschaft, 80333 München (DE)
(72) Erfinder: KELLERMANN, Astrid, 80993 München (DE); SCHWINGENSCHLÖGL, Christian, 85567 Grafing (DE)
(86) Internationale Anmeldenummer: PCT/EP2015/074749
(87) Internationale Veröffentlichungsnummer: WO 2016/128078

(56) Entgegenhaltungen:
- EP-A1- 2 708 850
- DE-A1-102009 053 080
- DE-A1-102011 011 213
- US-A1- 2005 004 757
- US-A1- 2008 059 061
- US-A1- 2014 365 113
- US-B1- 8 949 028

## Beschreibung

Die Erfindung betrifft ein Verfahren und ein System zur Förderung umweltfreundlicher Verkehrsmittel, insbesondere von Verkehrsmitteln mit geringen Emissionen.

Verkehrsnetze, insbesondere im städtischen Bereich, stoßen zunehmend an die Grenzen ihrer Belastbarkeit. Vor allem durch den zunehmenden motorisierten Straßenverkehr ergeben sich hierdurch negative Folgen hinsichtlich der Luftqualität, der Lärmbelastung und hinsichtlich der Verkehrssicherheit.

Die folgenden Druckschriften offenbaren Stand der Technik zum technologischen Hintergrund der Erfindung:
D1 US 2014/365113 A1 (Mc Gavran Christine B [US] et al 11. Dezember 2014 (2014-12-11)
D2 US 2008/059061 A1 (Lee Choy Wai [US]) 6.März 2008 (2008-03-06)
D3 EP 2 708 850 A1 (Alcatel Lucent [FR]) 19.März 2014 (2014-03-19)
D4 US 2005/004757 A1 (Neeman Teddy T [IL] et al) 6. Januar 2005 (2005-01-06)

Die Druckschrift D1 offenbart das Auswählen und Anzeigen von Navigationsdaten bzw. Routen und einer Bewegung eines Benutzers entlang einer ausgewählten Route auf einem Display eines Mobilgeräts.

Die Druckschrift D2 offenbart, dass auf unterschiedlichen Routen unterschiedliche Verkehrsmittel zur Verfügung stehen und an einem Übergang von einer Route zu einer nächsten Route eine Transportmodusänderung erkannt werden kann.

Die Druckschriften D3 und D4 betreffen weitere Navigationsgeräte zur Routenplanung, wobei in der Druckschrift auch beschrieben wird, dass dem Benutzer für bestimmte Routen ein jeweils bestimmtes Verkehrsmittel zur Verfügung steht.

Keine dieser Druckschrift beschäftigt sich damit, wie die Benutzer der dort verwendeten Navigationsgeräte und Routenplaner veranlasst werden könnten, Verkehrsmittel unweltfreundlicher zu verwenden. Sie geben auch keinerlei Hinweis wie das Verhalten eines Verkehrsteilnehmers besser ausgewählt bzw. bewertet werden kann.

Es ist daher eine Aufgabe der vorliegenden Erfindung, ein Verfahren und ein System zur Verbesserung des Bewertens des Verhaltens von Verkehrsteilnehmern (VT) zu schaffen.

Diese Aufgabe wird erfindungsgemäß durch ein Verkehrsmanagementverfahren mit den in Patentanspruch 1 angegebenen Merkmalen gelöst.

Die Erfindung schafft demnach ein Verkehrsmanagementverfahren zur Förderung umweltfreundlicher Verkehrsmittel mit den Schritten:
Übermitteln von berechneten Verkehrsroutenvorschlägen, die unterschiedliche Verkehrsmittel umfassen, durch eine Routingeinheit an einen anfragenden Verkehrsteilnehmer, Auswählen einer Verkehrsroute aus den übermittelten Verkehrsroutenvorschlägen durch den anfragenden Verkehrsteilnehmer und Übertragen der ausgewählten Verkehrsroute an die Routingeinheit, die dem Verkehrsteilnehmer Verkehrsroutendaten der von ihm ausgewählten Verkehrsroute bereitstellt, Übertragen von Positionsdaten des Verkehrsteilnehmers entlang der von dem Verkehrsteilnehmer genommenen Verkehrsroute zur Validierung der dabei durch den Verkehrsteilnehmer benutzten Verkehrsmittel und
Bewerten eines Verhaltens des Verkehrsteilnehmers auf Basis der von dem Verkehrsteilnehmer benutzten Verkehrsmittel.

Bei einer möglichen Ausführungsform des erfindungsgemäßen Verfahrens werden nach Erhalt einer Routenanfrage von dem Verkehrsteilnehmer die Verkehrsroutenvorschläge durch eine verkehrsmittelübergreifende oder eine verkehrsmittelspezifische Routingeinheit berechnet.

Bei einer weiteren möglichen Ausführungsform des erfindungsgemäßen Verfahrens übermittelt der Verkehrsteilnehmer entlang der von ihm genommenen Verkehrsroute ortsbezogene beobachtete verkehrsrelevante Ereignisse an eine Verkehrsmanagementzentrale und/oder an die Routingeinheit in einer Ereignismeldung.

Bei einer weiteren möglichen Ausführungsform des erfindungsgemäßen Verfahrens berechnet die Routingeinheit Verkehrsroutenvorschläge für Verkehrsteilnehmer in Abhängigkeit von übermittelten verkehrsrelevanten Ereignissen, die von einer Vielzahl von Verkehrsteilnehmern übermittelt werden.

Bei einer weiteren möglichen Ausführungsform des erfindungsgemäßen Verfahrens werden gemeldete ortsbezogene verkehrsrelevante Ereignisse, die von verschiedenen Verkehrsteilnehmern am selben Beobachtungsort stammen, zur Verifizierung und/oder Konkretisierung des beobachteten verkehrsrelevanten Ereignisses miteinander verglichen.

Bei einer weiteren möglichen Ausführungsform des erfindungsgemäßen Verfahrens berechnet die Routingeinheit nach Empfang einer Routenanfrage von einem Endgerät des Verkehrsteilnehmers verschiedene Verkehrsroutenvorschläge für Verkehrsrouten auf Basis von Navigationsdaten und/oder aktuellen Verkehrsdaten und sendet die Verkehrsroutenvorschläge an das Endgerät des Verkehrsteilnehmers zur Auswahl einer Verkehrsroute.

Bei einer weiteren möglichen Ausführungsform des erfindungsgemäßen Verfahrens überträgt die Routingeinheit nach Empfang einer Routenauswahlmeldung zur Auswahl einer Verkehrsroute von dem Endgerät des Verkehrsteilnehmers entsprechende berechnete Verkehrsroutendaten für die ausgewählte Verkehrsroute an das Endgerät des Verkehrsteilnehmers, wobei die Verkehrsroutendaten zur Visualisierung der ausgewählten Verkehrsroute in einer auf einer Anzeigeeinheit des Endgeräts angezeigten Karte dem Verkehrsteilnehmer angezeigt werden.

Bei einer weiteren möglichen Ausführungsform des erfindungsgemäßen Verfahrens wird die Routenauswahlmeldung von dem Endgerät des Verkehrsteilnehmers zusätzlich an eine Bewertungseinheit übertragen, welche das Verhalten des Verkehrsteilnehmers anhand der entlang der Verkehrsroute benutzten Verkehrsmittel bewertet.

Bei einer weiteren möglichen Ausführungsform des erfindungsgemäßen Verfahrens berechnet die Bewertungseinheit für das Verhalten des Verkehrsteilnehmers einen Verkehrsverhaltensanzeigewert auf Basis von Emissionswerten der von dem Verkehrsteilnehmer entlang der genommenen Verkehrsroute benutzten Verkehrsmittel.

Bei einer weiteren möglichen Ausführungsform des erfindungsgemäßen Verfahrens wird die Benutzung eines Verkehrsmittels mit niedrigen Emissionswerten durch die Bewertungseinheit höher bewertet als die Benutzung eines Verkehrsmittels, das einen hohen Emissionswert aufweist.

Bei einer weiteren möglichen Ausführungsform des erfindungsgemäßen Verfahrens nimmt die Bewertungseinheit die Bewertung des Verhaltens eines Verkehrsteilnehmers zusätzlich in Abhängigkeit von der Menge und/oder Qualität der von dem jeweiligen Verkehrsteilnehmer an die Routingeinheit und/oder eine Verkehrsmanagementzentrale übermittelten Ereignismeldungen vor.

Bei einer weiteren möglichen Ausführungsform des erfindungsgemäßen Verfahrens nimmt die Bewertungseinheit anhand von empfangenen Positionsdaten des Verkehrsteilnehmers eine Validierung der von dem Verkehrsteilnehmer entlang der Verkehrsroute benutzten Verkehrsmittel vor.

Bei einer weiteren möglichen Ausführungsform des erfindungsgemäßen Verfahrens meldet sich ein Verkehrsteilnehmer oder eine Gruppe von Verkehrsteilnehmern bei der Bewertungseinheit zur Bewertung ihres Verhaltens an.

Bei einer weiteren möglichen Ausführungsform des erfindungsgemäßen Verfahrens wird ein Verkehrsteilnehmer oder eine Gruppe von Verkehrsteilnehmern als Teilnehmersymbol mit Attributen an einer aktuellen Position entlang der Verkehrsroute auf einer oder mehreren Anzeigeeinheiten eines oder mehrerer Endgeräte der jeweiligen Verkehrsteilnehmer angezeigt.

Bei einer weiteren möglichen Ausführungsform des erfindungsgemäßen Verfahrens verändert die Bewertungseinheit das angezeigte Teilnehmersymbol und/oder dessen Attribute dynamisch in Abhängigkeit von dem bewerteten Verhalten des Verkehrsteilnehmers.

Bei einer weiteren möglichen Ausführungsform des erfindungsgemäßen Verfahrens wird der Verkehrsteilnehmer durch die Bewertungseinheit auf Basis des bewerteten Verhaltens des Verkehrsteilnehmers oder der Verkehrsteilnehmer auf Veranlassung der Bewertungseinheit belohnt.

Die Erfindung schafft ferner ein Verkehrsmanagementsystem mit den in Patentanspruch 17 angegebenen Merkmalen.

Die Erfindung schafft demnach ein Verkehrsmanagementsystem zur Förderung umweltfreundlicher Verkehrsmittel mit mobilen Endgeräten von Verkehrsteilnehmern, die Routenanfragen an eine Routingeinheit des Verkehrsmanagementsystems übertragen, wobei die Routingeinheit für jede empfangene Routenanfrage Verkehrsroutenvorschläge, die unterschiedliche Verkehrsmittel umfassen, berechnet und an den anfragenden Verkehrsteilnehmer übermittelt, der eine Verkehrsroute auswählt, deren Verkehrsroutendaten durch die Routingeinheit an den Verkehrsteilnehmer übertragen werden,
wobei die Routingeinheit die Positionsdaten des Verkehrsteilnehmers entlang der von dem Verkehrsteilnehmer genommenen Verkehrsroute zur Validierung der von dem Verkehrsteilnehmer dabei benutzten Verkehrsmittel auswertet und ein Verhalten des Verkehrsteilnehmers auf Basis der von dem Verkehrsteilnehmer benutzten Verkehrsmittel bewertet wird.

Bei einer möglichen Ausführungsform des erfindungsgemäßen Verkehrsmanagementsystems führt die Bewertungseinheit eine Bewertung des Verhaltens des Verkehrsteilnehmers in Abhängigkeit der Umweltfreundlichkeit der von dem Verkehrsteilnehmer benutzten Verkehrsmittel und/oder der Menge und/oder der Qualität von ortsbezogenen Ereignismeldungen durch, welche von dem Verkehrsteilnehmer stammen.

Bei einer weiteren möglichen Ausführungsform des erfindungsgemäßen Verkehrsmanagementsystems werden Verkehrsleitmittel und/oder Verkehrsmittel durch eine Steuereinheit des Verkehrsmanagementsystems in Abhängigkeit des von der Bewertungseinheit bewerteten Verhaltens einer Vielzahl von Verkehrsteilnehmern gesteuert.

Im Weiteren werden mögliche Ausführungsformen des erfindungsgemäßen Verfahrens und des erfindungsgemäßen Systems zur Förderung umweltfreundlicher Verkehrsmittel unter Bezugnahme auf die beigefügten Figuren näher erläutert.

Es zeigen:
- Fig. 1: ein Diagramm zur Darstellung eines Ausführungsbeispiels eines erfindungsgemäßen Verkehrsmanagementsystems;
- Fig. 2: ein Ablaufdiagramm zur Darstellung eines Ausführungsbeispiels eines erfindungsgemäßen Verkehrsmanagementverfahrens;
- Fig. 3: ein Signalisierungsdiagramm zur Erläuterung des Ausführungsbeispiels des erfindungsgemäßen Verkehrsmanagementsystems und des erfindungsgemäßen Verkehrsmanagementverfahrens;
- Figuren 4, 5: Diagramme zur Darstellung möglicher Ausführungsbeispiele des erfindungsgemäßen Verkehrsmanagementverfahrens und des erfindungsgemäßen Verkehrsmanagementsystems;
- Figuren 6, 7, 8: schematische Darstellungen zur Erläuterung der Funktionsweise des erfindungsgemäßen Verkehrsmanagementverfahrens und des erfindungsgemäßen Verkehrsmanagementsystems.

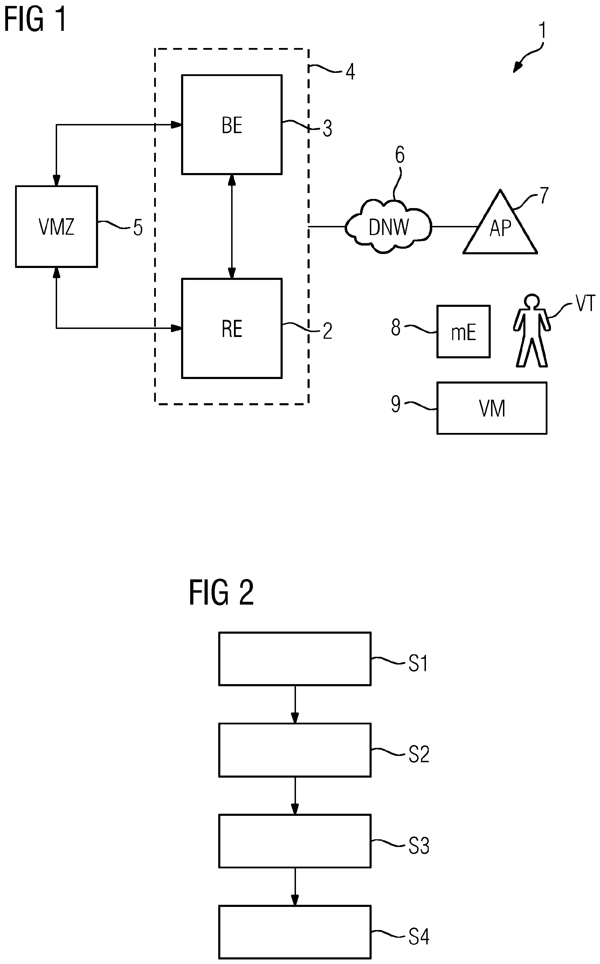

Wie man aus Fig. 1 erkennen kann, weist das erfindungsgemäße Verkehrsmanagementsystem 1 bei dem dargestellten Ausführungsbeispiel eine Routingeinheit 2 auf, die mit einer Bewertungseinheit 3 verbunden ist. Die Routingeinheit 2 und die Bewertungseinheit 3 können wie bei dem in Fig. 1 dargestellten Ausführungsbeispiel in einem Gerät 4 integriert sein. Bei einer alternativen Ausführungsform können sich die Routingeinheit 2 und die Bewertungseinheit 3 auch in verschiedenen Geräten befinden, die miteinander über eine Schnittstelle oder ein lokales Datennetzwerk verbunden sind. Bei dem in Fig. 1 dargestellten Ausführungsbeispiel sind die Routingeinheit 2 und die Bewertungseinheit 3 zusätzlich mit einer Verkehrsmanagementzentrale 5 verbunden. Wie in Fig. 1 dargestellt, kann das Gerät 4 ferner über ein Datennetzwerk 6 und Zugangspunkte 7 mit einer Vielzahl von mobilen Endgeräten 8 kommunizieren. Ein mobiles Endgerät 8 kann von einem Verkehrsteilnehmer VT mit sich geführt werden, der ein Verkehrsmittel 9 entlang einer Verkehrsroute benutzt, wobei der Verkehrsteilnehmer auch zu Fuß unterwegs sein kann. Bei dem mobilen Endgerät 8 kann es sich um ein tragbares mobiles Endgerät, beispielsweise ein mobiles Telefon des Verkehrsteilnehmers VT, handeln. Bei einer alternativen Ausführungsform kann das mobile Endgerät 8 auch in dem Verkehrsmittel 9 integriert sein. Bei dem Verkehrsmittel 9 kann er zu Fuß unterwegs sein oder es kann sich um ein individuelles Verkehrsmittel oder um ein öffentliches Verkehrsmittel handeln. Beispielsweise handelt es sich bei dem Verkehrsmittel 9 um ein von dem Verkehrsteilnehmer VT individuell benutztes Verkehrsmittel, beispielsweise ein Fahrrad oder ein Pkw. Alternativ kann es sich bei dem Verkehrsmittel 9 auch um ein von dem Verkehrsteilnehmer VT zusammen mit anderen Verkehrsteilnehmern benutztes Verkehrsmittel handeln, beispielsweise um einen Verkehrszug oder einen Verkehrsbus.

Der Verkehrsteilnehmer bzw. Nutzer VT kann von seinem mobilen Endgerät 8 über den Zugangspunkt 7 und das Datennetzwerk 6 eine Routenanfrage an die Routingeinheit 2 des Verkehrsmanagementsystems 1 übertragen. Die Routingeinheit 2 berechnet für jede empfangene Routenanfrage RANF Verkehrsroutenvorschläge VRV, die unterschiedliche Verkehrsmittel VM umfassen und übermittelt die berechneten Verkehrsroutenvorschläge VRV an den anfragenden Verkehrsteilnehmer VT. Dieser Verkehrsteilnehmer VT wählt anschließend eine Verkehrsroute aus, deren Verkehrsroutendaten VRD durch die Routingeinheit 2 an den Verkehrsteilnehmer VT übertragen werden. Die Routingeinheit 2 wertet die Positionsdaten PD, insbesondere GPS-Daten des Verkehrsteilnehmers VT entlang der von dem Verkehrsteilnehmer VT genommenen Verkehrsroute, zur Validierung der von dem Verkehrsteilnehmer VT dabei benutzten Verkehrsmittel VM aus. Weiterhin wird das Verhalten des Verkehrsteilnehmers VT durch die Bewertungseinheit 3 auf Basis der von dem Verkehrsteilnehmer VT benutzten Verkehrsmittel VM bewertet. Die Bewertungseinheit 3 führt eine Bewertung des Verhaltens des Verkehrsteilnehmers durch, wobei die Bewertung in Abhängigkeit der Umweltfreundlichkeit der von dem Verkehrsteilnehmer VT benutzten Verkehrsmittel VM sowie der Menge und/oder Qualität von ortsbezogenen Ereignismeldungen EM vorgenommen wird, welche von dem Verkehrsteilnehmer VT stammen. Bei einer möglichen Ausführungsform des erfindungsgemäßen Verkehrsmanagementsystems 1, wie es in Fig. 1 dargestellt ist, können die Daten zudem durch die Bewertungseinheit 3 und die Routingeinheit 2 an eine Verkehrsmittelzentrale 5 übertragen werden. Bei einer möglichen Ausführungsform weist das Verkehrsmanagementsystem 1 eine Steuereinheit auf, welche Verkehrsmittel und/oder Verkehrsleitmittel ansteuert. Bei einer möglichen Ausführungsform erfolgt die Ansteuerung der Verkehrsmittel VM und/oder Verkehrsleitmittel durch die Steuereinheit, die sich beispielsweise in der Verkehrsmanagementzentrale 5 befinden kann, in Abhängigkeit des von der Bewertungseinheit 3 bewerteten Verhaltens einer Vielzahl von Verkehrsteilnehmern.

Fig. 2 zeigt ein Ablaufdiagramm zur Darstellung eines Ausführungsbeispiels des erfindungsgemäßen Verkehrsmanagementverfahrens zur Förderung umweltfreundlicher Verkehrsmittel.

In einem ersten Schritt S1 werden durch die Routingeinheit 2 berechnete Verkehrsroutenvorschläge VRV, die unterschiedliche Verkehrsmittel VM umfassen, an einen anfragenden Verkehrsteilnehmer VT übermittelt.

Aus den übermittelten Verkehrsroutenvorschlägen VRV wird anschließend durch den anfragenden Verkehrsteilnehmer VT eine Verkehrsroute VR ausgewählt und diese ausgewählte Verkehrsroute an die Routingeinheit 2 übertragen, die dem Verkehrsteilnehmer VT daraufhin Verkehrsroutendaten VRD für die von ihm ausgewählte Verkehrsroute VR bereitstellt.

In einem weiteren Schritt S3 werden Positionsdaten PD des Verkehrsteilnehmers VT entlang der von dem Verkehrsteilnehmer VT genommenen Verkehrsroute VR zur Validierung der dabei durch den Verkehrsteilnehmer benutzten Verkehrsmittel VM übertragen. Bei der Validierung wird geprüft, ob der Verkehrsteilnehmer VT tatsächlich die entsprechenden Verkehrsmittel benutzt bzw. benutzt hat.

In einem weiteren Schritt S4 wird ein Verhalten des Verkehrsteilnehmers auf Basis der von dem Verkehrsteilnehmer VT benutzten Verkehrsmittel VM bewertet. Die Bewertung des Verhaltens erfolgt durch die Bewertungseinheit 3 einerseits in Abhängigkeit der von dem Verkehrsteilnehmer genommenen Verkehrsmittel VM und andererseits in Abhängigkeit von Ereignismeldungen EM, die von dem Verkehrsteilnehmer VT gesendet werden. Der Verkehrsteilnehmer VT kann entlang der von ihm genommenen Verkehrsroute VR ortsbezogene beobachtete verkehrsrelevante Ereignisse an die Verkehrsmanagementzentrale 5 und/oder an die Routingeinheit 2 in einer Ereignismeldung EM übermitteln. Der Verkehrsteilnehmer VT kann während seiner Fahrt beobachtete Ereignisse mit Ortsbezug an das Verkehrsmanagementsystem 1 liefern. Beispielsweise kann ein Verkehrsteilnehmer von ihm beobachtete Verkehrsstaus und sonstige Störungen an das Verkehrsmanagementsystem 1 melden. Beispielsweise kann ein Verkehrsteilnehmer VT in einer geschriebenen oder gesprochenen Textnachricht verkehrsrelevante Ereignisse an die Verkehrsmanagementzentrale 5 oder die Routingeinheit 2 in Ereignismeldungen EM übertragen. Die übermittelten Ereignismeldungen EM können neben Textdaten auch sonstige Daten, insbesondere Audio- oder Videodaten, umfassen. Beispielsweise kann ein Verkehrsteilnehmer VT, der in einem Fahrzeug sitzt, während der Fahrt eine gesprochene Meldung hinsichtlich eines Verkehrsereignisses in ein Mikrofon hineinsprechen, die beispielsweise einen auf der Gegenfahrbahn von ihm beobachteten Verkehrsstau betrifft. Der vorbeifahrende Verkehrsteilnehmer VT kann dabei zusätzliche Angaben hinsichtlich des aufgetretenen Verkehrsereignisses machen, beispielsweise die von ihm geschätzte Länge des Staus sowie die von ihm beobachtete Ursache des Staus. Je mehr und je detaillierter die Angaben hinsichtlich des beobachteten Verkehrsereignisses sind, desto höher ist die Qualität der von dem Verkehrsteilnehmer an das Verkehrsmanagementsystem 1 übermittelten Ereignismeldung. Bei einer möglichen Ausführungsform berechnet die Routingeinheit 2 Verkehrsroutenvorschläge VRV für andere Verkehrsteilnehmer VT in Abhängigkeit von den erhaltenen übermittelten verkehrsrelevanten Ereignissen. Bei einer möglichen Ausführungsform erfolgt eine Datenverarbeitung der von dem Verkehrsteilnehmer VT übermittelten verkehrsrelevanten Ereignismeldung EM teilweise oder vollständig automatisch. Die übermittelten Ereignismeldungen EM können verkehrsrelevante Ereignisse in strukturierter oder unstrukturierter Form beschreiben. Erhaltene Text- oder Audionachrichten können hinsichtlich bestimmter Schlüsselwörter analysiert werden. Weiterhin können erhaltene Bilddaten, die verkehrsrelevante Ereignisse anzeigen, automatisch mittels Objekterkennungsalgorithmen ausgewertet werden. Gemeldete ortsbezogene verkehrsrelevante Ereignisse, die von verschiedenen Verkehrsteilnehmern VT am selben Beobachtungsort, beispielsweise an einer Verkehrskreuzung oder dergleichen, stammen, werden vorzugsweise zur Verifizierung und/oder Konkretisierung des beobachteten verkehrsrelevanten Ereignisses miteinander verglichen. Beobachten zwei verschiedene Verkehrsteilnehmer VT1, VT2, beispielsweise an derselben Straßenkreuzung, einen Verkehrsunfall und melden diesen unabhängig voneinander in zwei verschiedenen Ereignismeldungen EM1, EM2 an das Verkehrsmanagementsystem 1, kann hierdurch seitens des Systems mit einer sehr hohen Wahrscheinlichkeit verifiziert werden, dass der aufgetretene Verkehrsunfall tatsächlich stattgefunden hat. Weiterhin können die Informationen, die von verschiedenen Verkehrsteilnehmern stammen, sich gegenseitig ergänzen und so eine größere Genauigkeit der Ereignisbeschreibung ermöglichen. Sofern sich die Informationen verschiedener Verkehrsteilnehmer widersprechen, können diese nach verschiedenen Kriterien ausgewertet werden, um eine möglichst zutreffende Beschreibung des Ereignisses zu erzielen.

Bei einer möglichen Ausführungsform können sich verschiedene Verkehrsteilnehmer VT oder eine Gruppe von Verkehrsteilnehmern gemeinsam bei der Bewertungseinheit 3 bzw. Bewertungsplattform zur Bewertung ihres Verhaltens anmelden. Das Verhalten eines Verkehrsteilnehmers VT umfasst einerseits die Art der von ihm benutzten Verkehrsmittel VM und andererseits die Menge und Qualität der von ihm gelieferten Ereignismeldungen EM.

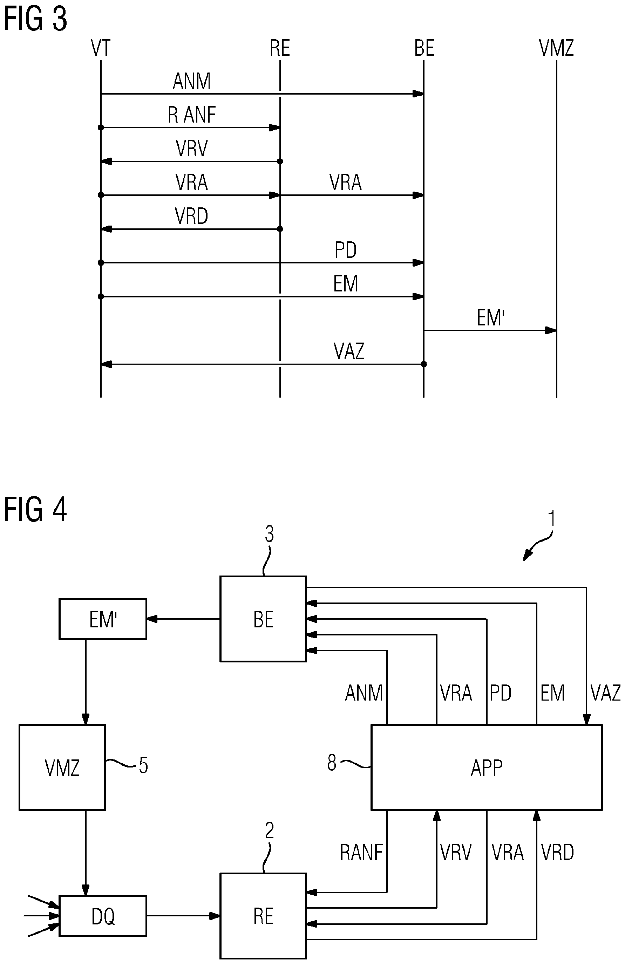

Fig. 3 zeigt schematisch in einem Signalisierungsdiagramm ein Ausführungsbeispiel des erfindungsgemäßen Verkehrsmanagementverfahrens. Zunächst kann sich ein Verkehrsteilnehmer VT bei der Bewertungseinheit 3 zur Teilnahme an dem erfindungsgemäßen Verkehrsmanagementverfahren in einem Anmeldeprozess ANM anmelden. Alternativ können sich auch mehrere Verkehrsteilnehmer VT zusammen in einer Verkehrsteilnehmergruppe VTG bei der Bewertungseinheit 3 anmelden. Nach Erhalt einer Routenanfrage RANF von dem angemeldeten Verkehrsteilnehmer VT werden durch die Routingeinheit 2 Verkehrsroutenvorschläge VRV berechnet. Bei der Routingeinheit 2 kann es sich bei einer möglichen Ausführungsform um eine verkehrsmittelübergreifende Routingeinheit handeln, die verschiedene Typen von Verkehrsmittel VM berücksichtigt. Alternativ kann es sich bei der Routingeinheit 2 auch um eine verkehrsmittelspezifische Routingeinheit, beispielsweise ausschließlich für Fahrräder, handeln. Die Routingeinheit 2 ermittelt die verschiedenen Verkehrsroutenempfehlungen bzw. Verkehrsroutenvorschläge VRV an den anfragenden Verkehrsteilnehmer, wie in Fig. 3 dargestellt. Die Routingeinheit 2 berechnet nach Empfang der Routenanfrage RANF von dem mobilen Endgerät 8 des Verkehrsteilnehmers VT verschiedene Verkehrsroutenvorschläge VRV für Verkehrsrouten VR auf Basis von Navigationsdaten und/oder aktuellen Verkehrsdaten. Die ausgewählte Verkehrsroute VR wird von der Routingeinheit 2 an das mobile Endgerät 8 des Verkehrsteilnehmers VT in einer Verkehrsroutenempfehlung VRV übermittelt. Der teilnehmende Verkehrsteilnehmer VT wählt aus den übermittelten verschiedenen Verkehrsroutenempfehlungen bzw. Verkehrsroutenvorschlägen VRV eine Verkehrsroute VR aus und überträgt die von ihm ausgewählte Verkehrsroute in einer Verkehrsroutenanzeigemeldung VRA sowohl an die Routingeinheit 2 als auch an die Bewertungseinheit 3, wie in Fig. 3 dargestellt. Nach Empfang der Routenauswahlmeldung zur Auswahl der Verkehrsroute VR überträgt die Routingeinheit 2 entsprechende Verkehrsroutendaten VRD für die ausgewählte Verkehrsroute VR an das mobile Endgerät 8 des Verkehrsteilnehmers VT. Die Verkehrsroutendaten VRD der ausgewählten Verkehrsroute werden anschließend auf einer Anzeigeeinheit bzw. einem Display des mobilen Endgeräts 8 in einer Karte dem Verkehrsteilnehmer angezeigt.

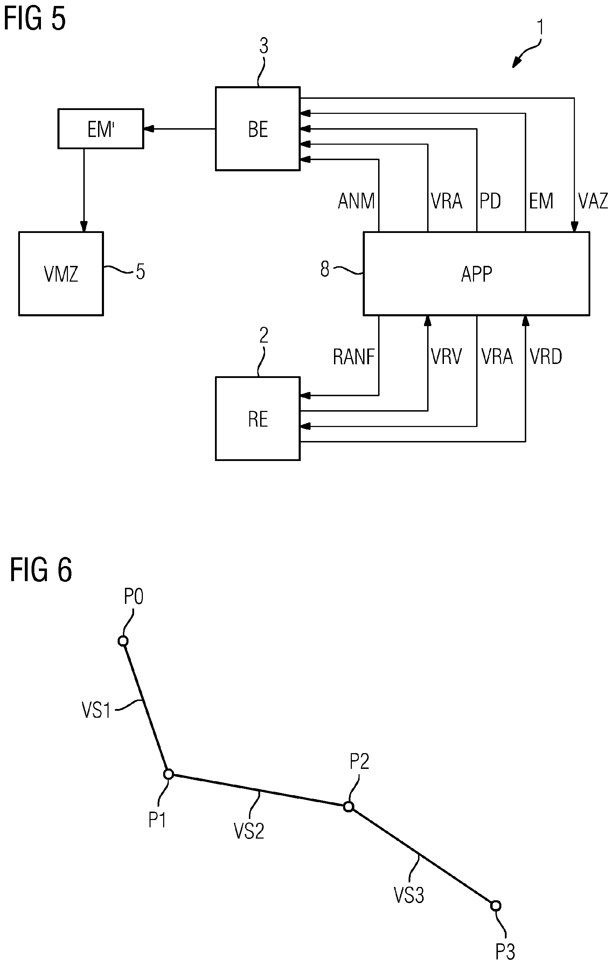

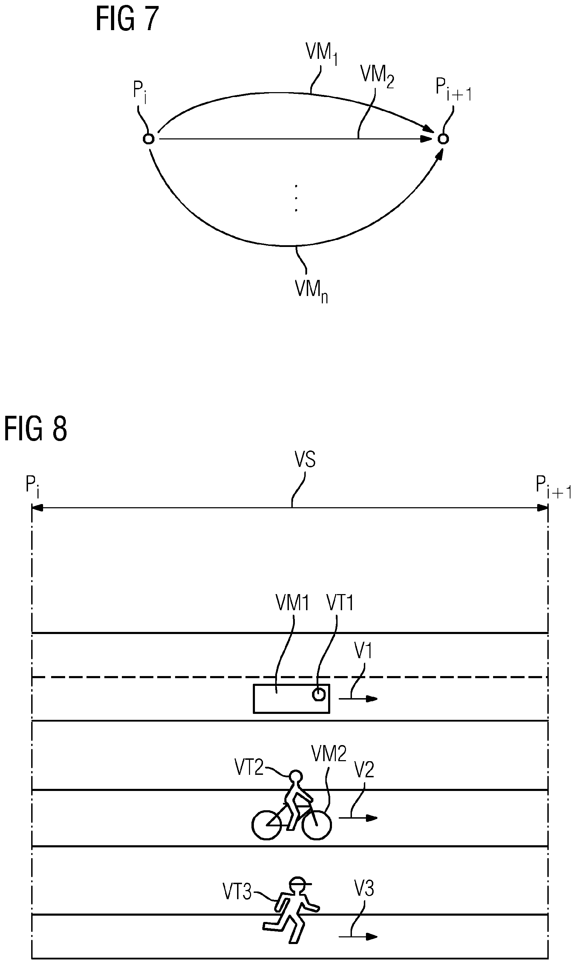

Eine Verkehrsroute VR umfasst typischerweise mehrere Streckenabschnitte zwischen verschiedenen Verkehrspunkten, die in den meisten Fällen mithilfe unterschiedlicher Verkehrsmittel VM erreicht werden können, wie schematisch in den Figuren 6, 7 dargestellt. Die Routenauswahlmeldung wird von dem Endgerät 8 des Verkehrsteilnehmers VT an die Bewertungseinheit 3 übertragen, welche das Verhalten des Verkehrsteilnehmers anhand der entlang der Verkehrsroute VR von ihm benutzten Verkehrsmittel VM bewertet. Bei einer möglichen Ausführungsform berechnet die Bewertungseinheit 3 für das Verhalten des Verkehrsteilnehmers einen Verkehrsverhaltensanzeigewert VAZ auf Basis von Emissionswerten der von dem Verkehrsteilnehmer VT entlang der genommenen Verkehrsroute VR benutzten Verkehrsmittel VM. Dabei wird die Benutzung eines Verkehrsmittels mit niedrigen Emissionswerten durch die Bewertungseinheit 3 höher bewertet als die Benutzung eines Verkehrsmittels mit einem hohen Emissionswert. Für die verschiedenen Verkehrsmittel bzw. Verkehrsmittelarten können in einem Datenspeicher verschiedene Emissionswerte hinsichtlich der CO₂-Belastung und/oder der Lärmbelästigung hinterlegt werden. Die Bewertungseinheit 3 bewertet vorzugsweise auf Basis der gespeicherten Emissionswerte der verschiedenen Verkehrsmittel VM einen Verkehrsverhaltensanzeigewert VAZ für das Verkehrsverhalten des Verkehrsteilnehmers VT. Bei einer möglichen Ausführungsform erfolgt die Bewertung des Verhaltens eines Verkehrsteilnehmers VT zusätzlich in Abhängigkeit von der Menge und/oder Qualität der von dem jeweiligen Verkehrsteilnehmer VT an die Routingeinheit 2 oder die Verkehrsmanagementzentrale 5 übermittelten Ereignismeldungen EM. Ein Verkehrsteilnehmer VT, welcher viele Ereignismeldungen mit hoher Qualität bzw. hohem Detaillierungsgrad an das Verkehrsmanagementsystem 1 überträgt, wird hinsichtlich seines Verhaltens besser bzw. höher bewertet als ein Verkehrsteilnehmer VT, der keine bzw. wenige Ereignismeldungen EM liefert.

Sobald der Verkehrsteilnehmer VT eine empfohlene Verkehrsroute ausgewählt hat und mit der Fahrt beginnt, werden Positionsdaten PD, insbesondere GPS-Daten, des Verkehrsteilnehmers VT aufgezeichnet. Sie werden kontinuierlich, periodisch oder ereignisorientiert, also z. B. am Ende jeder Fahrt, bei Erreichen eines bestimmten Ortes oder zu einer bestimmten Uhrzeit, oder manuell (z.B. vial Mail) an die Routingeinheit 2 und/oder die Bewertungseinheit 3 übermittelt. Die Bewertungseinheit 3 kann anhand der empfangenen Positionsdaten PD des Verkehrsteilnehmers VT automatisch eine Validierung der von dem Verkehrsteilnehmer VT entlang der genommenen Verkehrsroute VR benutzten Verkehrsmittel VM vornehmen. Anhand der Positionsdaten PD kann die Bewertungseinheit 3 einerseits prüfen, ob sich der Verkehrsteilnehmer VT tatsächlich entlang der empfohlenen Verkehrsroute VR bewegt oder bewegt hat, und kann andererseits überprüfen, ob der Verkehrsteilnehmer VT tatsächlich das empfohlene Verkehrsmittel VM mit der höchsten Umweltfreundlichkeit nimmt. Bei einer möglichen Ausführungsform kann die Bewertungseinheit 3 anhand der Änderungen der Positionsdaten PD im Zeitverlauf feststellen, ob sich der Verkehrsteilnehmer VT mit der für das Verkehrsmittel VM typischen Bewegungscharakteristik entlang der Verkehrsroute VR bewegt oder nicht. Bewegt sich beispielsweise ein Verkehrsteilnehmer mit einer Geschwindigkeit von mehr als 50 km/h entlang einer Verkehrsstrecke VS innerhalb der ausgewählten Verkehrsroute VR, kann davon ausgegangen werden, dass der Verkehrsteilnehmer VT beispielsweise nicht zu Fuß oder auf dem Fahrrad unterwegs ist. Bei einer möglichen Ausführungsform zeichnet eine im mobilen Endgerät 8 des Verkehrsteilnehmers VT implementierte Applikation während der Fahrt Positionspunkte Pᵢ entlang der Verkehrsroute VR auf und sendet diese Positionspunkte Pᵢ zusammen mit der Identität ID des Verkehrsteilnehmers VT in regelmäßigen Abständen, beispielsweise alle zwei Minuten, an die Bewertungseinheit 3 des Verkehrsmanagementsystems 1. Mit einer Plausibilitätsprüfung kann festgestellt werden, ob der Verkehrsteilnehmer VT in der ausgewählten Verkehrsroute VR die für die jeweilige Verkehrsstrecke VS vorgesehenen Verkehrsmittel VM tatsächlich benutzt. Die Auswertung bzw. Validierung kann auf Basis der übermittelten Positionspunkte Pᵢ und der daraus abgeleiteten Bewegungsgeschwindigkeit V sowie anhand von Haltepunkten bzw. Haltezeiten erfolgen.

Bei einer möglichen Ausführungsform wird für einen Verkehrsteilnehmer VT bzw. eine Gruppe von gemeinsam angemeldeten Verkehrsteilnehmern VTG ein Teilnehmersymbol mit Attributen an einer aktuellen Position entlang der ausgewählten Verkehrsroute VR auf einer Anzeigeeinheit des mobilen Endgeräts 8 dem jeweiligen Verkehrsteilnehmer bzw. den jeweiligen Verkehrsteilnehmern angezeigt. Bei einer möglichen Ausführungsform kann die Bewertungseinheit 3 das angezeigte Teilnehmersymbol und/oder dessen Attribute dynamisch in Abhängigkeit von dem bewerteten Verhalten des Verkehrsteilnehmers VT verändern. Die Attribute des Teilnehmersymbols umfassen beispielsweise verkehrstypische Kleidungsstücke. Das Teilnehmersymbol ist beispielsweise ein Avatar, welcher den Verkehrsteilnehmer bzw. die Teilnehmergruppe darstellt. Das Verkehrsteilnehmersymbol VT-SYMB kann sich über die Zeit entsprechend dem Verhalten, insbesondere Verkehrsverhalten, des Teilnehmers verändern. Entsprechend dem bewerteten Verkehrsverhalten bzw. Verhalten des Verkehrsteilnehmers kann sich das Aussehen des angezeigten Avatars bzw. angezeigten Teilnehmersymbols verändern. Beispielsweise kann ein Verkehrsteilnehmer VT, der oft und lange ein Fahrrad als Verkehrsmittel VM benutzt, ein symbolisch dargestelltes verbessertes Fahrrad seitens der Bewertungseinheit 3 zugewiesen bekommen, welches dem Verkehrsteilnehmer in einer Darstellung auf seinem mobilen Endgerät 8 angezeigt wird. Verschiedene Verkehrsteilnehmer, die ein Team bzw. eine Gruppe VTG von Verkehrsteilnehmern VT, beispielsweise innerhalb eines Stadtteils bilden, können ein gemeinsames Trikot erhalten, das ihre Teamzugehörigkeit darstellt. Durch das veränderte Teilnehmersymbol und/oder durch die Veränderung von Attributen können einzelne Verkehrsteilnehmer VT oder Teilnehmergruppen VTG zur Benutzung eines bestimmten Verkehrsmittels VM zusätzlich motiviert werden.

Bei einer möglichen Ausführungsform veranlasst die Bewertungseinheit 3 auf Basis des bewerteten Verhaltens des Verkehrsteilnehmers VT oder einer Verkehrsteilnehmergruppe VTG eine Belohnung der Verkehrsteilnehmer VT. Beispielsweise kann ein Verkehrsteilnehmer VT dahingehend belohnt werden, dass er Bonuspunkte bzw. Bonusmeilen für bestimmte Verkehrsmittel, insbesondere innerhalb des öffentlichen Nahverkehrs, als Fußgänger oder Radfahrer erhält. Beispielsweise kann ein Verkehrsteilnehmer VT, der sich umweltfreundlich verhält, mit virtuellen Prämien, beispielsweise dynamischen Attributen, oder realen Prämien belohnt werden, z. B. mit einer kostenfreien oder kostenreduzierten Zugfahrt seitens der Bewertungseinheit 3 . Eine weitere Belohnungsmöglichkeit besteht beispielsweise darin, dass ein Verkehrsteilnehmer VT, der sich umweltfreundlich verhält, mit einem seiner Verkehrsmittel VM besondere Verkehrsrouten benutzen darf, die anderen Verkehrsteilnehmern VT versperrt bleiben. Beispielsweise kann ein Verkehrsteilnehmer, welcher sich normalerweise umweltfreundlich mit dem Fahrrad bewegt, seitens der Bewertungseinheit 3 damit belohnt werden, dass er mit seinem Pkw als alternatives Verkehrsmittel VM eine privilegierte Fahrspur innerhalb des Stadtverkehrs benutzen darf.

Die Bewertungseinheit 3 kann bei einer möglichen Ausführungsform Benutzungsstatistiken über eine Vielzahl von Verkehrsteilnehmern VT generieren. Hierbei werden beispielsweise Nutzerzahlen, Nutzungshäufigkeit von Verkehrsmitteln VM, betreffende Verkehrsrouten VR und Ähnliches ausgewertet. Diese Daten können neben dem Verkehrsmanagement auch zur Verkehrsplanung verwendet werden.

Die Bewertungseinheit 3 kann bei einer möglichen Ausführungsform für jeden Verkehrsteilnehmer VT einen Verkehrsverhaltensanzeigewert VAZ berechnen und bei Anfrage durch den Verkehrsteilnehmer an diesen übermitteln, wie in Fig. 3 dargestellt. Zur Berechnung des Verkehrsverhaltensanzeigewertes VAZ werden nicht nur die von dem Verkehrsteilnehmer VT tatsächlich benutzten Verkehrsmittel VM berücksichtigt, sondern auch die von dem Verkehrsteilnehmer VT übermittelten Ereignismeldungen EM, welche die Bewertungseinheit 3 von den mobilen Endgeräten 8 der Verkehrsteilnehmer erhält. Die Verkehrsereignismeldungen EM können durch die Bewertungseinheit 3 zusätzlich an die Verkehrsmanagementzentrale 5 weitergeleitet werden. In Abhängigkeit von den verschiedenen Ereignismeldungen EM' kann die Verkehrsmanagementzentrale 5 zusätzlich Verkehrsleitmittel oder direkt Verkehrsmittel zur Förderung des Verkehrsflusses ansteuern. Wird beispielsweise von verschiedenen Verkehrsteilnehmern VT, die sich an derselben Straßenkreuzung befinden, ein Verkehrsunfall gemeldet, kann die Verkehrsmanagementzentrale 5 bzw. eine darin integrierte Steuerung Verkehrsleitmittel, beispielsweise Verkehrsampeln, derart ansteuern, dass der Verkehrsfluss an der betroffenen Straßenkreuzung vorbeigeleitet wird. Hierdurch können Verkehrsstaus aufgrund bestimmter Verkehrsereignisse weitgehend vermieden werden, sodass zusätzlich CO₂-Emissionen verhindert werden.

Fig. 6 dient zur Verdeutlichung der Funktionsweise des erfindungsgemäßen Verkehrsmanagementverfahrens. Fig. 6 zeigt eine Verkehrsroute zwischen einem Startpunkt P0 und einem Zielpunkt P3. Die Verkehrsroute VR umfasst mehrere Verkehrsstrecken VS1, VS2, VS3. Für jede Verkehrsstrecke VSᵢ können verschiedene Verkehrsmittel VM vorgesehen sein, wie in Fig. 7 dargestellt. Beispielsweise kann zwischen einem Verkehrsroutenpunkt Pᵢ und einem Verkehrsroutenpunkt Pᵢ₊₁ die Möglichkeit bestehen, ein erstes Verkehrsmittel VM1, ein zweites Verkehrsmittel VM2 oder ein sonstiges Verkehrsmittel VMₓ zu benutzen. Beispielsweise besteht für eine bestimmte Verkehrsstrecke VS die Möglichkeit, diese zu Fuß, mit dem Auto oder mit dem Fahrrad zurückzulegen.

Fig. 8 zeigt beispielsweise eine Straße mit einem danebenliegenden Fahrradweg und einem Fußgängerweg. Ein Verkehrsteilnehmer VT hat somit die Möglichkeit, diese Verkehrsstrecke VS innerhalb der Verkehrsroute VR mit dem Verkehrsmittel VM1 Pkw, mit dem Verkehrsmittel VM2 Fahrrad oder zu Fuß (VM3) zurückzulegen. Entsprechend dem ausgewählten Verkehrsmittel VM bewegt sich der Verkehrsteilnehmer VT mit einer für das Verkehrsmittel VM typischen Geschwindigkeit V1, V2, V3 entlang der Verkehrsstrecke VS von dem Positionspunkt Pᵢ zu dem Positionspunkt Pᵢ₊₁. Bei dem dargestellten Beispiel ist die Verkehrsgeschwindigkeit V des Verkehrsmittels VM1 Pkw V1 größer als die Verkehrsgeschwindigkeit V2 des Verkehrsmittels VM2 Fahrrad, das einerseits eine höhere Verkehrsgeschwindigkeit aufweist als die Geschwindigkeit V3 eines Fußgängers VM3. Anhand der zwischen den Streckenpunkten erreichten Bewegungsgeschwindigkeit V1, V2, V3 kann die Bewertungseinheit 3 bei einer möglichen Ausführungsform das von dem Verkehrsteilnehmer VT genommene Verkehrsmittel VM validieren. Wählt beispielsweise ein Verkehrsteilnehmer VT eine Verkehrsroute VR, deren Streckenabschnitte mit dem Verkehrsmittel VM Fahrrad bewältigt werden sollen, benutzt jedoch in Wirklichkeit einen Pkw, kann dies bei einer möglichen Ausführungsform durch die Bewertungseinheit 3 festgestellt werden und in die Bewertung des Verhaltens des Verkehrsteilnehmers VT negativ einfließen. Hierdurch wird es einem Verkehrsteilnehmer VT erschwert, die Bewertung seines Verkehrsverhaltens zu manipulieren. Versucht ein Verkehrsteilnehmer VT die Bewertung seines Verhaltens wiederholt zu verfälschen, kann er bei einer möglichen Ausführungsform von der Teilnahme an dem Verkehrsmanagementverfahren ausgeschlossen werden.

Fig. 4 zeigt ein Ausführungsbeispiel des erfindungsgemäßen Verkehrsmanagementsystems 1. Bei der dargestellten Ausführungsform wird ein intermodales bzw. verkehrsmittelübergreifendes Routing durch eine Routingeinheit 2 vorgenommen. Zunächst kann sich der Nutzer bzw. Verkehrsteilnehmer VT bei der Plattform bzw. Bewertungseinheit 3 anmelden. Anschließend sendet der Nutzer eine Routenanfrage von seinem mobilen Endgerät 8 an die intermodale Routingeinheit 2. Die Routingeinheit 2 berechnet Routenempfehlungen bzw. Verkehrsroutenempfehlungen unter Berücksichtigung aktueller Verkehrsdaten bzw. Navigationsdaten aus verschiedenen Datenquellen. Anschließend erfolgt eine Routenauswahl durch den Nutzer, wobei die ausgewählte Route an die Routingeinheit 2 und die Bewertungseinheit 3 übertragen wird. In einem weiteren Schritt wird die Route zur Visualisierung auf einer Karte seitens der Routingeinheit 2 an die auf dem mobilen Endgerät 8 ablaufende Applikation übertragen. Der Nutzer bzw. Verkehrsteilnehmer hat die Möglichkeit, ortsgebundene Ereignisse bzw. verkehrsrelevante Ereignisse, die er beobachtet, in sein mobiles Endgerät 8 über eine Nutzerschnittstelle einzugeben, wobei die angegebenen ortsgebundenen Ereignisse in einer Ereignismeldung von der Applikation an die Bewertungseinheit 3 und ggf. auch an die Routingeinheit 2 übertragen werden. Die Bewertungseinheit 3 kann verschiedene Ereignismeldungen EM von verschiedenen Verkehrsteilnehmern VT erhalten und auswerten. Hierdurch können die gemeldeten verkehrsrelevanten Ereignisse verifiziert und ggf. auch konkretisiert werden. Anschließend werden die ausgewerteten Ereignisse an die Verkehrsmanagementzentrale 5 weitergeleitet. Die Bewertungseinheit 3 bewertet das Verhalten des Verkehrsteilnehmers VT anhand der übermittelten Ereignisse und der von ihm genommenen Verkehrsmittel VM und berechnet hierzu bei einer möglichen Ausführungsform einen Verkehrsverhaltensanzeigewert VAZ, der von dem Nutzer abgefragt werden kann.

Bei dem in Fig. 4 dargestellten Ausführungsbeispiel des erfindungsgemäßen Verkehrsmanagementsystems 1 kann die intermodale Routingeinheit 2 auf unterschiedliche Datenquellen zugreifen. Beispielsweise kann die Routingeinheit 2 auf Verkehrsmeldungen hinsichtlich des Individualverkehrs IV zugreifen und/oder auf Daten des öffentlichen Verkehrs.

Fig. 5 zeigt ein weiteres Ausführungsbeispiel des erfindungsgemäßen Verkehrsmanagementsystems 1. Bei dem dargestellten Ausführungsbeispiel ist die Routingeinheit 2 eine verkehrsmittelspezifische Routingeinheit für ein bestimmtes Verkehrsmittel, beispielsweise nur für Fahrräder.

Ein Vorteil des erfindungsgemäßen Verkehrsmanagementsystems 1 besteht darin, dass die Verkehrsteilnehmer VT einen Anreiz erhalten, möglichst umweltfreundliche Verkehrsmittel VM zwischen einem Startpunkt und einem Zielpunkt einer Verkehrsroute VR zu benutzen. Hierdurch können CO₂- und Stickstoffemissionen, insbesondere im Stadtgebiet, vermindert werden. Weiterhin können Lärmemissionen bzw. Lärmbelästigungen hierdurch reduziert werden. Da die Verkehrsteilnehmer VT in die Verkehrsbeobachtung miteinbezogen werden, wird zusätzlich der Verkehrsfluss innerhalb des Gebietes optimiert. Durch die Verbesserung des Verkehrsflusses werden wiederum die Emissionsbelastungen innerhalb des Gebietes weiter vermindert. Ein weiterer Nebeneffekt des erfindungsgemäßen Verkehrsmanagementsystems 1 besteht darin, dass auch die Gesundheit der Verkehrsteilnehmer gefördert wird, da diese einen Anreiz erhalten, umweltfreundliche und gleichzeitig gesundheitsfördernde Verkehrsmittel VM zu benutzen. Die von einer Vielzahl von Verkehrsteilnehmern gewonnenen Verkehrsdaten können zusätzlich in die Verkehrsplanung von Verkehrsmitteln VM innerhalb eines Gebietes einfließen.

## Patentansprüche

1. Verkehrsmanagementverfahren zur Verbesserung des Bewertens des Verhaltens von Verkehrsteilnehmern (VT) mit den Schritten:
a) Übermitteln (S1) von berechneten Verkehrsroutenvorschlägen (VRV), die unterschiedliche Verkehrsmittel (VM) umfassen, durch eine Routingeinheit (RE, 2) an einen anfragenden Verkehrsteilnehmer (VT);
b) Auswahlen (S2) einer Verkehrsroute (VR) aus den übermittelten Verkehrsroutenvorschlägen (VRZ) durch den anfragenden Verkehrsteilnehmer (VT) und Übertragen der ausgewählten Verkehrsroute (VRA) an die Routingeinheit (RE, 2), die dem Verkehrsteilnehmer (VT) Verkehrsroutendaten (VRD) der von ihm ausgewählten Verkehrsroute (VR) bereitstellt, wobei für die Verkehrsroute (VR; VRA) mehrere Arten von Verkehrsmitteln (VS1, VS2, VS3) zur Benutzung durch den Verkehrsteilnehmer (VT) vorgesehen sind;
c) Übertragen (S3) von Positionsdaten (PD) des Verkehrsteilnehmers (VT) entlang der von dem Verkehrsteilnehmer (VT) genommenen Verkehrsroute (VR) zur Validierung der dabei durch den Verkehrsteilnehmer (VT) benutzten Verkehrsmittel (VM);
d) Bewerten (S4) eines Verhaltens des Verkehrsteilnehmers (VT) auf Basis der von dem Verkehrsteilnehmer (VT) auf der von ihm genommenen Verkehrsroute (VR) benutzten Verkehrsmittel (VM), wobei das Verhalten des Verkehrsteilnehmers (VT) zumindest die Art der von ihm benutzten Verkehrsmittel (VM) umfasst.

2. Verfahren nach Anspruch 1,
wobei nach Erhalt einer Routenanfrage (RANF) von dem Verkehrsteilnehmer (VT) die Verkehrsroutenvorschläge (VRV) durch eine verkehrsmittelübergreifende oder eine verkehrsmittelspezifische Routingeinheit (RE, 2) berechnet werden.

3. Verfahren nach Anspruch 1 oder 2,
wobei der Verkehrsteilnehmer (VT) entlang der von ihm genommenen Verkehrsroute (VR) ortsbezogene beobachtete verkehrsrelevante Ereignisse an eine Verkehrsmanagementzentrale (VMZ, 5) und/oder an die Routingeinheit (RE, 2) in einer Ereignismeldung (EM) übermittelt.

4. Verfahren nach Anspruch 3,
wobei die Routingeinheit (RE, 2) Verkehrsroutenvorschläge (VRV) für Verkehrsteilnehmer (VT) in Abhängigkeit von übermittelten verkehrsrelevanten Ereignissen berechnet, die von einer Vielzahl von Verkehrsteilnehmern (VT) übermittelt werden.

5. Verfahren nach Anspruch 3 oder 4,
wobei gemeldete ortsbezogene verkehrsrelevante Ereignisse, die von verschiedenen Verkehrsteilnehmern (VT) am gleichen Beobachtungsort stammen, zur Verifizierung und/oder Konkretisierung des beobachteten verkehrsrelevanten Ereignisses miteinander verglichen werden.

6. Verfahren nach einem der vorangehenden Ansprüche 1 bis 5,
wobei die Routingeinheit (RE, 2} nach Empfang einer Routenanfrage von einem Endgerät (8} des Verkehrsteilnehmers (VT) verschiedene Verkehrsroutenvorschläge (VRV) für Verkehrsrouten (VR) auf Basis von Navigationsdaten und/oder aktuellen Verkehrsdaten berechnet und an das Endgerät (8) des Verkehrsteilnehmers (VT) zur Auswahl einer Verkehrsroute (VR) sendet.

7. Verfahren nach Anspruch 6,
wobei die Routingeinheit (RE, 2) nach Empfang einer Routenauswahlmeldung (VRA) zur Auswahl einer Verkehrsroute (VR) von dem Endgerät (8) des Verkehrsteilnehmers (VT) entsprechende berechnete Verkehrsroutendaten (VRD) für die ausgewählte Verkehrsroute (VR) an das Endgerät (8) des Verkehrsteilnehmers (VT) überträgt, die zur Visualisierung der ausgewählten Verkehrsroute (VR) in einer auf einer Anzeigeeinheit des Endgeräts (8) angezeigten Karte dem Verkehrsteilnehmer (VT) angezeigt werden.

8. Verfahren nach Anspruch 7,
wobei die Routenauswahlmeldung (VRA) von dem Endgerät (8) des Verkehrsteilnehmers (VT) zusätzlich an eine Bewertungseinheit (BE, 3) übertragen wird, welche das Verhalten des Verkehrsteilnehmers (VT) anhand der entlang der Verkehrsroute (VR) benutzten Verkehrsmittel (VM) bewertet.

9. Verfahren nach Anspruch 8 ,
wobei die Bewertungseinheit (BE, 3) für das Verhalten des Verkehrsteilnehmers (VT) einen Verkehrsverhaltensanzeigewert (VAZ) für das Verkehrsverhalten des Verkehrsteilnehmers (VT) auf Basis von Emissionswerten der von dem Verkehrsteilnehmer (VT) entlang der genommenen Verkehrsroute (VR) benutzten Verkehrsmittel (VM) berechnet.

10. Verfahren nach Anspruch 9,
wobei die Benutzung eines Verkehrsmittels (VM) mit niedrigen Emissionswerten durch die Bewertungseinheit (BE, 3) höher bewertet wird als die Benutzung eines Verkehrsmittels (VM), das hohe Emissionswerte aufweist.

11. Verfahren nach einem der vorangehenden Ansprüche 8 bis 10, wobei die Bewertungseinheit (BE, 3) ausgelegt ist die Bewertung des Verhaltens eines Verkehrsteilnehmers (VT) zusätzlich in Abhängigkeit von der Menge und/oder Qualität von Ereignismeldungen (EM) vorzunehmen, die von dem jeweiligen Verkehrsteilnehmer (VT) an die Routingeinheit (RE, 2) und/oder eine Verkehrsmanagementzentrale (VMZ, 5) übermittelt werden wobei die Qualität den Detaillierungsgrad der Ereignismeldung darstellt

12. Verfahren nach einem der vorangehenden Ansprüche 8 bis 11, wobei die Bewertungseinheit (BE, 3) anhand von empfangenen Positionsdaten (PD) des Verkehrsteilnehmers (VT) eine Validierung der von dem Verkehrsteilnehmer (VT) entlang der Verkehrsroute (VR) benutzten Verkehrsmittel (VM) vornimmt.

13. Verfahren nach einem der vorangehenden Ansprüche 8 bis 12, wobei ein Verkehrsteilnehmer (VT) oder eine Gruppe (VTG) von Verkehrsteilnehmern (VT) sich bei der Bewertungseinheit (BE, 3) zur Bewertung ihres Verhaltens anmeldet.

14. Verfahren nach einem der vorangehenden Ansprüche 1 bis 13, wobei ein Verkehrsteilnehmer (VT) oder eine Gruppe (VTG) von Verkehrsteilnehmern (VT) als Teilnehmersymbol an einer aktuellen Position entlang der Verkehrsroute (VR) auf einer oder mehreren Anzeigeeinheiten eines oder mehrerer Endgeräte (8) der jeweiligen Verkehrsteilnehmer (VT) angezeigt wird.

15. Verfahren nach Anspruch 14,
wobei die Bewertungseinheit (BE, 3) das angezeigte Teilnehmersymbol dynamisch in Abhängigkeit von dem bewerteten Verhalten des Verkehrsteilnehmers (VT) verändert.

16. Verfahren nach einem der vorangehenden Ansprüche 1 bis 15, wobei die Bewertungseinheit (BE, 3) auf Basis des bewerteten Verhaltens des Verkehrsteilnehmers (VT) den Verkehrsteilnehmer (VT) oder eine Gruppe von Verkehrsteilnehmern direkt belohnt oder eine Belohnung des Verkehrsteilnehmers (VT) oder einer Gruppe (VTG) von Verkehrsteilnehmern veranlasst.

17. Verkehrsmanagementsystem (1) zur Verbesserung des Bewertens des Verhaltens von Verkehrsteilnehmern (VT)
a) mit mobilen Endgeräten (8) von Verkehrsteilnehmern (VT), die Routenanfragen (RANF) an eine Routingeinheit (RE, 2) des Verkehrsmanagementsystems (1) übertragen,
b) wobei die Routingeinheit (RE, 2} für jede empfangene Routenanfrage (RANF) Verkehrsroutenvorschläge (VRV), die unterschiedliche Verkehrsmittel (VM) umfassen, berechnet und an den anfragenden Verkehrsteilnehmer (VT) übermittelt,
c) wobei der Verkehrsteilnehmer (VT) eine Verkehrsroute (VR) auswählt, deren Verkehrsroutendaten (VRD) durch die Routingeinheit (RE, 2) an den Verkehrsteilnehmer (VT) übertragen werden, wobei für die Verkehrsroute (VR; VRA) mehrere Arten von Verkehrsmitteln (VS1, VS2, VS3) zur Benutzung durch den Verkehrsteilnehmer (VT) vorgesehen sind;
d) wobei die Routingeinheit (RE, 2) die Positionsdaten (PD) des Verkehrsteilnehmers (VT) entlang der von dem Verkehrsteilnehmer (VT) genommenen Verkehrsroute (VR) zur Validierung der von dem Verkehrsteilnehmer (VT) auf der von ihm genommenen Verkehrsroute (VR) benutzten Verkehrsmittel (VM) auswertet und ein Verhalten des Verkehrsteilnehmers (VT) auf Basis der von dem Verkehrsteilnehmer (VT) benutzten Verkehrsmittel (VM) bewertet wird, wobei das Verhalten des Verkehrsteilnehmers (VT) zumindest die Art der von ihm benutzten Verkehrsmittel (VM) umfasst.

18. Verkehrsmanagementsystem (1) nach Anspruch 17,
wobei eine Bewertungseinheit (BE, 3) des Verkehrsmanagementsystems (1} ausgelegt ist eine Bewertung des Verhaltens des Verkehrsteilnehmers (VT) in Abhängigkeit der Umweltfreundlichkeit der von dem Verkehrsteilnehmer (VT) benutzten Verkehrsmittel (VM) und der Menge und/oder Qualität von ortsbezogenen Ereignismeldungen (EM) welche von dem Verkehrsteilnehmer, VT, stammen, vorzunehmen wobei die Qualität den Detaillierungsgrad der Ereignismeldung darstellt.

19. Verkehrsmanagementsystem (1) nach Anspruch 18, mit einer Steuereinheit, die ausgelegt ist zum Steuern von Verkehrsleitmitteln und/oder Verkehrsmitteln (VM) in Abhängigkeit des von der Bewertungseinheit (BE, 3) bewerteten Verhaltens einer Vielzahl von Verkehrsteilnehmern (VT) gesteuert werden.

20. Verfahren nach Anspruch 1, wobei das Verhalten des Verkehrsteilnehmers (VT) auch die Menge und Qualität der von ihm gelieferten Ereignismeldungen (EM) umfasst.

21. Verkehrsmanagementsystem (1) nach Anspruch 18, wobei das Verhalten des Verkehrsteilnehmers (VT) auch die Menge und Qualität der von ihm gelieferten Ereignismeldungen (EM) umfasst.

## Claims

1. Traffic management method for promoting environmentally friendly means of transportation (VM) comprising the steps:
a) communication (S1) of calculated traffic route proposals (VRV) which comprise different means of transportation (VM) by a routing unit (RE, 2) to a requesting road user (VT);
b) selection (S2) of a traffic route (VR) from the communicated traffic route proposals (VRZ) by the requesting road user (VT) and transmission of the selected traffic route (VRA) to the routing unit (RE, 2) which supplies the road user (VT) with traffic route data (VRD) relating to the traffic route (VR) selected by said road user (VT) wherein a plurality of types of means of transportation (VS1, VS2, VS3) are provided for use by the road user (VT) for the traffic route (VR; VRA);
c) transmission (S3) of position data (PD) of the road user (VT) along the traffic route (VR) taken by the road user (VT), in order to validate the means of transportation (VM) used in this context by the road user (VT); and
d) evaluation (S4) of a behaviour of the road user (VT) on the basis of the means of transportation (VM) used by the road user (VT) on the traffic route (VR) taken by said road user (VT), wherein the behaviour of the road user (VT) comprises at least the type of means of transportation (VM) used by said road user.

2. Method according to Claim 1,
wherein after the receipt of a route request (RANF) from the road user (VT) the traffic route proposals (VRV) are calculated by a routing unit (RE, 2) which is for multiple means of transportation or is specific to one means of transportation.

3. Method according to Claim 1 or 2,
wherein along the traffic route (VR) taken by the road user (VT) said road user (VT) communicates location-related, observed traffic-relevant events to a traffic management control center (VMZ, 5) and/or to the routing unit (RE, 2) in an event report (EM).

4. Method according to Claim 3,
wherein the routing unit (RE, 2) calculates traffic route proposals (VRV) for road users (VT) as a function of communicated traffic-relevant events which are communicated by a multiplicity of road users (VT).

5. Method according to Claim 3 or 4,
wherein reported, location-related, traffic-relevant events which originate from various road users (VT) at the same observation location, are compared with one another in order to verify and/or specify the observed traffic-relevant event.

6. Method according to one of the preceding Claims 1 to 5,
wherein after reception of a route request from a terminal (8) of the road user (VT) the routing unit (RE, 2) calculates various traffic route proposals (VRV) for traffic routes (VR) on the basis of navigation data and/or current traffic data and transmits them to the terminal (8) of the road user (VT) for selection of a traffic route (VR) .

7. Method according to Claim 6,
wherein after reception of a route selection report (VRA) for selection of a traffic route (VR) from the terminal (8) of the road user (VT) the routing unit (RE, 2) transmits corresponding calculated traffic route data (VRD) for the selected traffic route (VR) to the terminal (8) of the road user (VT), which traffic route data (VRD) are displayed, for the purpose of visualizing the selected traffic route (VR) on a map of the road user (VT) which is displayed on a display unit of the terminal (8).

8. Method according to Claim 7,
wherein the route selection report (VRA) is transmitted from the terminal (8) of the road user (VT) additionally to an evaluation unit (BE, 3) which evaluates the behaviour of the road user (VT) with reference to the means of transportation (VM) used along the traffic route (VR) .

9. Method according to Claim 8,
wherein, for the behaviour of the road user (VT), the evaluation unit (BE, 3) calculates a traffic behaviour display value (VAZ) for the traffic behaviour of the road user (VT), on the basis of emission values of the means of transportation (VM) used by the road user (VT) along the traffic route (VR) which is taken.

10. Method according to Claim 9,
wherein the use of a means of transportation (VM) with low emission values is evaluated with a higher evaluation by the evaluation unit (BE, 3) than the use of a means of transportation (VM) which has high emission values.

11. Method according to one of the preceding Claims 8 to 10,
wherein the evaluation unit (BE, 3) is configured to perform the evaluation of the behaviour of a road user (VT) additionally as a function of the quantity and/or quality of event reports (EM) which are communicated by the respective road user (VT) to the routing unit (RE, 2) and/or a traffic management control center (VMZ, 5), wherein the quality represents the degree of detail of the event report.

12. Method according to one of the preceding Claims 8 to 11,
wherein the evaluation unit (BE, 3) performs a validation of the means of transportation (VM) used by the road user (VT) along the traffic route (VR) with reference to received position data (PD) of the road user (VT).

13. Method according to one of the preceding Claims 8 to 12,
wherein a road user (VT) or a group (VTG) of road users (VT) sign on at the evaluation unit (BE, 3) for the evaluation of their behaviour.

14. Method according to one of the preceding Claims 1 to 13,
wherein a road user (VT) or a group (VTG) of road users (VT) is displayed as a user symbol at a current position along the traffic route (VR) on one or more display units of one or more terminals (8) of the respective road users (VT) .

15. Method according to Claim 14,
wherein the evaluation unit (BE, 3) changes the displayed user symbol dynamically as a function of the evaluated behaviour of the road user (VT).

16. Method according to one of the preceding Claims 1 to 15,
wherein the evaluation unit (BE, 3) rewards the road user (VT) or a group of road users directly, or brings about a reward of the road user (VT) or a group (VTG) of road users, on the basis of the evaluated behaviour of the road user (VT).

17. Traffic management system (1) for improving the evaluation of the behaviour of the road users (VT)
a) with mobile terminals (8) of road users (VT) which transmit route requests (RANF) to a routing unit (RE, 2) of the traffic management system (1),
b) wherein the routing unit (RE, 2) calculates, for each received route request (RANF), traffic route proposals (VRV) which comprise different means of transportation (VM), and communicates said traffic route proposals (VRV) to the requesting road user (VT),
c) wherein the road user (VT) selects a traffic route (VR) whose traffic route data (VRD) are transmitted to the road user (VT) via the routing unit (RE, 2), wherein a plurality of types of means of transportation (VS1, VS2, VS3) for use by the road user (VT) are provided for the traffic route (VR; VRA);
d) wherein the routing unit (RE, 2) evaluates the position data (PD) of the road user (VT) along the traffic route (VR) taken by the road user (VT), in order to validate the means of transportation (VM) used by the road user (VT) on the traffic route (VR) taken by said road user (VT), and a behaviour of the road user (VT) is evaluated on the basis of the means of transportation (VM) used by the road user (VT), wherein the behaviour of the road user (VT) comprises at least the type of means of transportation (VM) used by said road user (VT) .

18. Traffic management system (1) according to Claim 17,
wherein an evaluation unit (BE, 3) of the traffic management system (1) is configured to perform an evaluation of the behaviour of the road user (VT) as a function of the environmental friendliness of the means of transportation (VM) used by the road user (VT) and the quantity and/or quality of location-related event reports (EM) which originate from the road user, VT, wherein the quality represents the degree of detail of the event report.

19. Traffic management system (1) according to Claim 18, having a control unit which is configured to control traffic management means and/or means of transportation (VM) as a function of the behaviour of a multiplicity of road users (VT) which is evaluated by the evaluation unit (BE, 3).

20. Method according to Claim 1, wherein the behaviour of the road user (VT) also comprises the quantity and quality of the event reports (EM) supplied by said road user (VT).

21. Traffic management system (1) according to Claim 18,
wherein the behaviour of the road user (VT) also comprises the quantity and quality of the event reports (EM) supplied by said road user (VT).

## Revendications

1. Procédé de gestion de la circulation destiné à améliorer l'appréciation du comportement d'usagers de la route (VT), comprenant les étapes dans lesquelles :
a) des propositions d'itinéraires calculés (VRV), qui comprennent des moyens de transport différents (VM) sont communiqués (S1), via une unité de routage (RE, 2), à un usager de la route (VT) qui en fait la demande ;
b) l'usager de la route demandeur (VT) fait le choix (S2) d'un itinéraire (VR) à partir des propositions d'itinéraires communiqués (VRZ) et l'itinéraire sélectionné (VRA) est communiqué à l'unité de routage (RE, 2) qui met à disposition de l'usager de la route (VT) des données d'itinéraires (VRD) concernant l'itinéraire sélectionné par ses soins (VR) ; dans lequel, pour l'itinéraire (VR ; VRA), plusieurs types de moyens de transport (VS1, VS2, VS3) sont envisagés pour leur utilisation par l'usager de la route (VT) ;
c) des données de position (PD) de l'usager de la route (VT) sont communiquées (S3) le long de l'itinéraire (VR) emprunté par l'usager de la route (VT) à des fins de validation du moyen de transport (VM) utilisé en l'occurrence par l'usager de la route (VT) ;
d) un comportement de l'usager de la route (VT) fait l'objet d'une appréciation (S4) sur base des moyens de transport (VM) utilisés par l'usager de la route (VT) le long de l'itinéraire (VR) emprunté par ce dernier ; dans lequel le comportement de l'usager de la route (VT) comprend au moins le type des moyens de transport (VM) utilisés par ses soins.

2. Procédé selon la revendication 1, dans lequel, après la réception d'une demande d'itinéraire (RANF) formulée par l'usager de la route (VT), les propositions d'itinéraires (VRV) sont calculées par une unité de routage (RE, 2) qui recouvre des moyens de transport ou qui manifeste une spécificité vis-à-vis d'un moyen de transport.

3. Procédé selon la revendication 1 ou 2, dans lequel l'usager de la route (VT) communique, le long de l'itinéraire (VR) emprunté par ses soins, des événements pertinents pour le trafic, observés en rapport avec un endroit, à une centrale de gestion de la circulation (VMZ, 5) et/ou à l'unité de routage (RE, 2) sous la forme d'un compte rendu d'événement (EM).

4. Procédé selon la revendication 3, dans lequel l'unité de routage (RE, 2) calcule des propositions d'itinéraires (VRV) pour des usagers de la route (VT) en fonction d'événements transmis pertinents pour le trafic, qui sont communiqués par une multitude d'usagers de la route (VT).

5. Procédé selon la revendication 3 ou 4, dans lequel des événements mentionnés pertinents pour le trafic, en rapport avec un endroit, qui émanent de différents usagers de la route (VT) au même endroit d'observation, sont comparés les uns aux autres à des fins de vérification et/ou de concrétisation de l'événement observé pertinent pour le trafic.

6. Procédé selon l'une quelconque des revendications précédentes 1 à 5, dans lequel l'unité de routage (RE, 2), après réception d'une demande d'itinéraire émanant d'une station terminale (8) de l'usager de la route (VT), calcule différentes propositions d'itinéraires (VRV) pour des itinéraires (VR) sur base de données de navigation et/ou de données de circulation actualisées et les transmet à la station terminale (8) de l'usager de la route (VT) à des fins de sélection d'un itinéraire (VR).

7. Procédé selon la revendication 6, dans lequel l'unité de routage (RE, 2), après réception d'une demande de sélection d'itinéraire (VRA) pour la sélection d'un itinéraire (VR) à partir de la station terminale (8) de l'usager de la route (VT), transmet à la station terminale (8) de l'usager de la route (VT) des données itinéraires calculées correspondantes (VRD) pour l'itinéraire sélectionné (VR), qui s'affichent aux yeux de l'usager de la route (VT) à des fins de visualisation de l'itinéraire sélectionné (VR) sur une carte qui s'affiche sur une unité d'affichage de la station terminale (8).

8. Procédé selon la revendication 7, dans lequel la demande de sélection itinéraire (VRA) émanant de la station terminale (8) de l'usager de la route (VT) est en outre communiquée à une unité d'appréciation (BE, 3) qui apprécie le comportement de l'usager de la route (VT) en fonction des moyens de transport (VM) utilisés le long de l'itinéraire (VR).

9. Procédé selon la revendication 8, dans lequel l'unité d'appréciation (BE, 3) calcule, pour le comportement de l'usager de la route (VT), une valeur d'affichage de comportement du trafic (VAZ) pour le comportement de trafic de l'usager de la route (VT) sur base de valeurs d'émissions de moyens de transport (VM) utilisés par l'usager de la route (VT) le long de l'itinéraire emprunté (VR) .

10. Procédé selon la revendication 9, dans lequel l'utilisation d'un moyen de transport (VM) auquel sont liés de faibles valeurs d'émission reçoit une appréciation de la part de l'unité d'appréciation (BE, 3) supérieure à celle concernant l'utilisation d'un moyen de transport (VM) qui présente des valeurs d'émission élevées.

11. Procédé selon l'une quelconque des revendications précédentes 8 à 10, dans lequel l'unité d'appréciation (BE, 3) est conçue pour procéder à l'appréciation du comportement d'un usager de la route (VT) également en fonction de la quantité et/ou de la qualité de comptes rendus d'événements (EM) qui sont communiqués par l'usager de la route respectif (VT) à l'unité de routage (RE, 2) et/ou à une centrale de gestion de la circulation (VMZ, 5) ; dans lequel la qualité représente le degré de précision du compte rendu d'événement.

12. Procédé selon l'une quelconque des revendications précédentes 8 à 11, dans lequel l'unité d'appréciation (BE, 3), sur base de données de position reçues (PD) de la part de l'usager de la route (VT), procède à une validation du moyen de transport (VM) utilisé par l'usager de la route (VT) le long de l'itinéraire (VR).

13. Procédé selon l'une quelconque des revendications précédentes 8 à 12, dans lequel un usager de la route (VT) ou un groupe (VTG) d'usagers de la route (VT) s'enregistre auprès de l'unité d'appréciation (BE, 3) à des fins d'appréciation de son/leur comportement.

14. Procédé selon l'une quelconque des revendications précédentes 1 à 13, dans lequel un usager de la route (VT) ou un groupe (VTG) d'usagers de la route (VT) s'affiche sous la forme d'un symbole utilisateur à une position en vigueur le long de l'itinéraire (VR) sur une ou plusieurs unités d'affichage d'une ou de plusieurs stations terminales (8) des usagers de la route respectifs (VT).

15. Procédé selon la revendication 14, dans lequel l'unité d'appréciation (BE, 3) modifie de manière dynamique le symbole utilisateur affiché en fonction du comportement de l'usager de la route (VT) ayant fait l'objet d'une appréciation.

16. Procédé selon l'une quelconque des revendications précédentes 1 à 15, dans lequel l'unité d'appréciation (BE, 3), sur base du comportement de l'usager de la route (VT) ayant fait l'objet d'une appréciation, récompense directement l'usager de la route (VT) ou un groupe d'usagers de la route ou bien fait le nécessaire pour récompenser l'usager de la route (VT) ou un groupe (VTG) d'usagers de la route.

17. Système de gestion de la circulation (1) destiné à améliorer l'appréciation du comportement d'usagers de la route (VT)
a) comprenant des stations terminales mobiles (8) d'usagers de la route qui communiquent des demandes d'itinéraires (RANF) à une unité de routage (RE, 2) du système de gestion de la circulation (1) ;
b) dans lequel l'unité de routage (RE, 2) calcule, pour chaque demande d'itinéraire reçue (RANF), des propositions d'itinéraires (VRV) qui comprennent des moyens de transport différents (VM), et les communiquent à l'usager de la route (VT) qui en fait la demande ;
c) dans lequel l'usager de la route (VT) fait le choix d'un itinéraire (VR) dont les données d'itinéraires (VRD) sont communiquées par l'unité de routage (RE, 2) à l'usager de la route (VT) ; dans lequel, pour l'itinéraire (VR, VRA), plusieurs types de moyens de transport (VS1, VS2, VS3) destinés à être utilisés par l'usager de la route (VT) sont envisagés ;
d) dans lequel l'unité de routage (RE, 2) évalue les données de position (PD) de l'usager de la route (VT) le long de l'itinéraire (VR) emprunté par l'usager de la route (VT) à des fins de validation des moyens de transport (VM) utilisés par l'usager de la route (VT) sur l'itinéraire (VR) emprunté par ses soins et un comportement de l'usager de la route (VT) fait l'objet d'une appréciation sur base des moyens de transport (VM) utilisés par l'usager de la route (VT) ; dans lequel le comportement de l'usager de la route (VT) comprend au moins le type de moyen de transport (VM) que ce dernier utilise.

18. Système de gestion de la circulation (1) selon la revendication 17, dans lequel une unité d'appréciation (BE, 3) du système de gestion de la circulation (1) est conçue pour procéder à une appréciation du comportement de l'usager de la route (VT) en fonction de l'aspect écologique des moyens de transport (VM) utilisés par l'usager de la route (VT) et de la quantité et/ou de la qualité de comptes rendus d'événements (EM) en rapport avec un endroit, qui émanent de l'usager de la route (VT) ; dans lequel la qualité représente le degré de précision du compte rendu d'événement.

19. Système de gestion de la circulation (1) selon la revendication 18, comprenant une unité de commande qui est conçue pour la commande de moyens de guidage de la circulation et/ou des moyens de transport (VM) sont commandés en fonction du comportement d'une multitude d'usagers de la route (VT), ayant fait l'objet d'une appréciation de la part de l'unité d'appréciation (BE, 3).

20. Procédé selon la revendication 1, dans lequel le comportement de l'usager de la route (VT) comprend également la quantité et la qualité des comptes rendus d'événements (EM) fournis par ses soins.

21. Système de gestion de la circulation (1) selon la revendication 18, dans lequel le comportement de l'usager de la route (VT) comprend également la quantité et la qualité des comptes rendus d'événements (EM) fournis par ses soins.
